(19) Europäisches Patentamt / European Patent Office / Office européen des brevets

(11) EP 2 174 769 A1

(12) **EUROPÄISCHE PATENTANMELDUNG**

(43) Veröffentlichungstag:
**14.04.2010 Patentblatt 2010/15**

(51) Int Cl.:
*B29C 45/78* (2006.01)     *B29C 45/77* (2006.01)

(21) Anmeldenummer: **08017593.8**

(22) Anmeldetag: **07.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Neo-plastic Dr. Doetsch Diespeck GmbH**
**91456 Diespeck (DE)**

(72) Erfinder: **Freiherr von Twickel, Patrick**
**91413 Neustadt/Aisch (DE)**

(74) Vertreter: **Tschirwitz, Christian**
**Tergau & Pohl**
**Patentanwälte**
**Mögeldorfer Hauptstraße 51**
**D-90482 Nürnberg (DE)**

(54) **Spritzgussverfahren und zugehörige Anlage**

(57) Es wird ein besonders effektives Spritzgussverfahren angegeben, bei dem während der Nachdruckphase ($P_N$) eines Spritzgussganges ($Z^{(i)}$) der zeitliche Verlauf eines Werkzeuginnendrucks ($p_w$) gemessen wird, bei dem aus dem erfassten Verlauf des Werkzeuginnendrucks ($p_w$) mindestens eine nicht-zeitabhängige Kenngröße ($p_a; p_{max}, t_{max}, m, \tau_1, \tau_2$) ermittelt wird, bei dem die oder jede Kenngröße ($p_a; p_{max}, t_{max}, m, \tau_1, \tau_2$) mit einem hinterlegten Kenngrößen-Sollwert ($p_{a,0}$) verglichen wird, und bei dem anhand des Vergleichsergebnisses automatisch ein Temperaturwert ($T_{z,0}$) einer Prozesstemperatur ($T_z$) angepasst wird. Eine zugehörige Spritzgussanlage (1) umfasst insbesondere ein Spritzgusswerkzeug (3), das mit einem Innendrucksensor (17) zur Erfassung eines Werkzeuginnendrucks ($p_w$) versehen ist, eine Heizeinrichtung (11) zur Einstellung der Prozesstemperatur ($T_z$) sowie eine die Heizeinrichtung (11) ansteuernde und zur Durchführung des Verfahrens ausgebildete Steuereinheit (4).

Fig. 1

## EP 2 174 769 A1

**Beschreibung**

Die Erfindung bezieht sich auf ein Spritzgussverfahren sowie auf eine Spritzgussanlage zur Durchführung des Verfahrens.

Eine herkömmliche Spritzgussanlage umfasst im Wesentlichen ein Spritzgusswerkzeug, bei dem es sich um die eigentliche "Spritzgussform" handelt, sowie eine Spritzgussmaschine, mittels der das Spritzgusswerkzeug mit einer aufgeschmolzenen Spritzgussmasse beschickt wird. Im Inneren des Spritzgusswerkzeuges ist eine mit der Spritzgussmasse auszufüllende Kavität gebildet. Das Spritzgusswerkzeug umfasst weiterhin ein (Leit-)System von Angusskanälen, über die die Spritzgussmasse in die Kavität eingeleitet wird. Anstelle von (unbeheizten) Angusskanälen, in denen die Spritzgussmasse unter Bildung des sogenannten Angusses erstarrt, kann das Leitsystem ganz oder teilweise auch aus beheizten Kanälen (Heißkanälen) gebildet sein.

Die Spritzgussmaschine umfasst in der Regel einen beheizten Zylinder, mit dem die Spritzgussmasse geschmolzen und über eine dem Zylinder vorgelagerte Düse in das Spritzgusswerkzeug eingespritzt wird. In dem Zylinder befindet sich zumeist eine Schnecke zum Vortrieb der Spritzgussmasse oder ein ähnliches Vortriebssystem. Eine herkömmliche Spritzgussanlage umfasst des Weiteren häufig eine Temperaturregelung, mittels der die Zylindertemperatur, die Düsentemperatur und/oder die Heißkanaltemperatur eingestellt werden können.

Zur Überwachung des Spritzgussvorgangs sind bei herkömmlichen Spritzgussanlagen teilweise auch im Werkzeug Drucksensoren vorgesehen, die einen örtlichen Druck der flüssigen bzw. erstarrenden Spritzgussmasse innerhalb der Kavität (nachfolgend als Werkzeuginnendruck bezeichnet) messen.

Ein Arbeitszyklus einer Spritzgussanlage (nachfolgend auch als Spritzgussgang bezeichnet) gliedert sich im Wesentlichen in zwei Phasen, nämlich eine Einspritzphase (auch als Füllphase bezeichnet), in der die Spritzgussmasse in die Kavität eingespritzt wird, sowie eine anschließende Nachdruckphase (auch als Verdichtungsphase bezeichnet), in der die Kavität im Werkzeug bereits mit Spritzgussmasse voll ausgefüllt ist, in der aber zur Verdichtung der Masse maschinenseitig ein so genannter Nachdruck in der Regel konstant aufrecht erhalten wird.

Im Laufe des Spritzgussvorgangs ergibt sich für den Werkzeuginnendruck eine charakteristische Kurve. Der Werkzeuginnendruck steigt hierbei im Bereich des Übergangs von der Einspritzphase in die Nachdruckphase zunächst stark an. Nach Durchschreiten eines Maximums sinkt der Werkzeuginnendruck dann allmählich wieder auf den Wert Null ab. Dieser Druckabfall - trotz des maschinenseitig konstant aufrecht erhaltenen Nachdrucks - ist eine Folge der zunehmenden Abkühlung und der damit einhergehenden Erstarrung der Spritzgussmasse im Werkzeug.

Für jedes Spritzgusswerkzeug ergibt sich eine im Detail individuell verschiedene "Ideal"-Form der Werkzeuginnendruckkurve. Diese ideale Werkzeuginnendruckkurve wird häufig im Zuge einer Prozessoptimierung als Referenzkurve bestimmt. Der tatsächliche Verlauf des Werkzeuginnendrucks in der laufenden Produktion hängt bei ein und demselben Werkzeug und gleicher Einstellung des Zylinderinnendrucks im Wesentlichen von dem Fließverhalten der Spritzgussmasse ab. Das Fließverhalten ist wiederum u.a. durch die chemische Zusammensetzung der Spritzgussmasse bestimmt. In der laufenden Produktion wird der Zylinderinnendruck in der Nachdruckphase üblicherweise manuell derart eingestellt, dass der Werkzeuginnendruck etwa auf der Referenzkurve verläuft. Größere Abweichungen hiervon führen zu Schlechtteilen, die aussortiert werden müssen.

In industriellen Spritzgussprozessen unterliegt das Fließverhalten der Spritzgussmasse Schwankungen, die insbesondere durch verschiedene Chargen der Spritzgussmasse mit mehr oder weniger verschiedener chemischer Zusammensetzung verursacht werden. Werden die Prozessparameter nicht an das sich ändernde Fließverhalten der Spritzgussmasse angepasst, so führt dies dazu, dass die tatsächliche Werkzeuginnendruckkurve allmählich aus einem Toleranzbereich um die optimierte Referenz-Kurve herausläuft und somit Schlechtteile produziert werden. In diesem Fall wird gängigerweise der Nachdruck manuell nachgestellt, um bei der fortgesetzten Produktion die laufende Innendruckkurve wieder an die Referenz-Kurve anzunähern. Diese Nachstellung erfordert ein hohes Maß an Qualifikation und "Fingerspitzengefühl" beim Bedienpersonal. Das Erfordernis, die Spritzgussanlage nachstellen zu müssen, führt auch zu vergleichsweise hohen Ausschussraten einer Spritzgussanlage.

Der Erfindung liegt vor diesem Hintergrund die Aufgabe zugrunde, ein besonders effektives Spritzgussverfahren sowie eine zur Verfahrensdurchführung besonders geeignete Spritzgussanlage anzugeben.

Diese Aufgabe wird bezüglich des Verfahrens erfindungsgemäß gelöst durch die Merkmale des Anspruchs 1. Danach ist vorgesehen, während der Nachdruckphase eines Spritzgussganges den zeitlichen Verlauf eines Werkzeuginnendrucks zu messen. Verfahrensgemäß wird aus dem erfassten Verlauf des Werkzeuginnendrucks mindestens eine Kenngröße ermittelt, die den Verlauf der Werkzeuginnendruckkurve während der Nachdruckphase charakterisiert, die aber auf der Zeitskala eines Spritzgussganges nicht selbst zeitabhängig ist. Die oder jede Kenngröße wird mit einem zugehörigen, hinterlegten Kenngrößen-Sollwert verglichen. Anhand des Vergleichsergebnisses wird automatisch ein Temperaturwert einer Prozesstemperatur des Spritzgussverfahrens, z.B. für einen nachfolgenden Spritzgussgang angepasst.

Als Prozesstemperatur wird allgemein eine Temperatur der Spritzgussmasse in der Spritzgussmaschine oder dem Spritzgusswerkzeug bezeichnet, die durch entsprechende Beheizung der Maschine bzw. des Werkzeugs während des Spritzgussganges eingestellt wird. Prozesstemperaturen in diesem Sinne bilden insbesondere die im Zylinder der Spritzgussmaschine herrschende Zylindertemperatur, die in der Düse der Spritzgussmaschine herrschende Düsentemperatur oder die in einem (beheizten) Heißkanal des Werkzeugs herrschende Heißkanaltemperatur.

Indem eine solche Prozesstemperatur in Abhängigkeit der Eigenschaften der Werkzeuginnendruckkurve während der Nachdruckphase korrigiert wird, wird direkt auf das (auch temperaturabhängige) Fließverhalten der Spritzgussmasse Einfluss genommen. Änderungen des Fließverhaltens infolge einer sich ändernden chemischen Zusammensetzung der Spritzgussmasse beim Chargenwechsel können hierdurch besonders gut kompensiert werden.

Durch die Idee, die Werkzeuginnendruckkurve während der Nachdruckphase auf eine oder mehrere, nicht-zeitabhängige Kenngrößen zu reduzieren, und lediglich diese Kenngrößen für die Anpassung der Prozesstemperatur zu verwenden, ermöglicht dabei eine besonders einfache und numerisch anspruchslose Umsetzung des Verfahrens, die mit preisgünstigen Mitteln realisierbar ist. Dies begünstigt einen breiten industriellen Einsatz des Verfahrens, und insbesondere auch eine einfache Aufrüstung herkömmlicher Spritzgussanlagen zur Durchführung des Verfahrens.

Indem verfahrensgemäß die Prozesstemperatur automatisch nachgestellt wird, reagiert eine das Verfahren ausführende Spritzgussanlage selbsttätig und ohne Verzug auf sich ändernde Arbeitsbedingungen, insbesondere eine Änderung der chemischen Zusammensetzung der Spritzgussmasse. Hierdurch lässt sich der Anteil der in der laufenden Produktion erzeugten Schlechtteile in erheblichem Maße reduzieren.

In bevorzugter Ausführung des Verfahrens werden als nicht-zeitabhängige Kenngröße für den zeitlichen Verlauf des Werkzeuginnendrucks während der Nachdruckphase einzeln oder in beliebiger Kombination ein Maximalwert, ein zugehöriger Zeitpunkt, ein Mittelwert oder eine Anfangssteigung der Werkzeuginnendruckkurve herangezogen. Zusätzlich oder alternativ hierzu wird zweckmäßigerweise eine Zeitkonstante für den Anstieg und/oder den Abfall des Werkzeuginnendrucks während der Nachdruckphase als Kenngröße herangezogen.

In einer besonders präzisen Variante des Verfahrens wird die Prozesstemperatur in der laufenden Produktion während eines jeden Spritzgussganges bestimmt und stets für den nächstfolgenden Spritzgussgang angepasst. Die Prozesstemperatur wird somit zumindest näherungsweise kontinuierlich an sich ändernde Arbeitsbedingungen angepasst. Da es sich bei einer Prozesstemperatur - insbesondere im Vergleich mit Prozessdrucken der Spritzgussmasse - stets um eine vergleichsweise träge, d.h. nur langsam veränderliche Größe handelt, kann es alternativ auch sinnvoll sein, die Prozesstemperatur nur in regelmäßigen Abständen von mehreren Spritzgussgängen, also nach jedem n-ten Spritzgussgang (n = 2,3,4,...) anzupassen. Alternativ hierzu kann aber auch nach jeder Anpassung der Prozesstemperatur, und vor dem nächstfolgenden Spritzgussgang eine Ruhephase vorgesehen sein, innerhalb derer sich die Prozesstemperatur auf den neuen Temperaturwert einstellen kann, ohne dass die Produktion weiterläuft.

In einer alternativen Ausführungsvariante des Verfahrens, die numerisch besonders anspruchslos und somit technisch besonders einfach und preisgünstig zu realisieren ist, wird die Prozesstemperatur nur dann angepasst, wenn die ermittelte Kenngröße bzw. mindestens eine der ermittelten Kenngrößen einen vorgegebenen Schwellwertbereich um den zugeordneten Sollwert verlässt. Der eingestellte Temperaturwert der Prozesstemperatur wird in der laufenden Produktion also so lange unverändert aufrecht erhalten, bis der hieraus resultierende Verlauf der Werkzeuginnendruckkurve - gemessen an dem Wert der erhobenen Kenngröße(n) - um mehr als ein kritisches Maß von der Referenzkurve abweicht. Erst in diesem Fall wird die Prozesstemperatur angepasst. Bei dieser Verfahrensvariante wird die Prozesstemperatur vorzugsweise in diskreten Schritten von beispielsweise 1-5 °C verstellt.

Zusätzlich zu dem Schwellwertbereich, dessen Überschreitung die Anpassung der Prozesstemperatur auslöst, ist bei der vorstehend beschriebenen Verfahrensvariante bevorzugt ein Toleranzbereich um den oder jeden Kenngrößen-Sollwert definiert. Ein in dem laufenden Spritzgussgang gefertigtes Formteil wird dabei bestimmungsgemäß dann als Schlechtteil aussortiert, wenn die in diesem Spritzgussgang erhobene Kenngröße bzw. mindestens eine der erhobenen Kenngrößen außerhalb dieses Toleranzbereiches liegt.

Der Toleranzbereich ist dabei zweckmäßigerweise größer gewählt als der Schwellwertbereich, so dass der Schwellwertbereich in dem Toleranzbereich mit Sicherheitsabständen zu dessen Grenzen einliegt. Hierdurch wird ausgeschlossen, dass bei einer Drift der Kenngröße bzw. einer der Kenngrößen in der laufenden Produktion Schlechtteile produziert werden, bevor die Anpassung der Prozesstemperatur vorgenommen wird.

Bei der Prozesstemperatur handelt es sich bevorzugt um eine geregelte Größe. In diesem Fall wird als Temperaturwert ein in die Regelung eingehender Temperatursollwert angepasst. Auf diese Weise können insbesondere herkömmliche Spritzgussanlagen mit bereits vorhandener Temperaturregelung einfach zur Durchführung des vorstehend beschriebenen Verfahrens nachgerüstet werden.

Bezüglich der Spritzgussanlage wird die obige Aufgabe erfindungsgemäß gelöst durch die Merkmale des Anspruchs 7. Danach umfasst die Spritzgussanlage ein Spritzgusswerkzeug, das mit mindestens einem Innendrucksensor zur Erfassung eines Werkzeuginnendrucks versehen ist. Die Spritzgussanlage umfasst weiterhin eine Heizeinrichtung zur Einstellung einer Prozesstemperatur sowie eine die Heizeinrichtung ansteuernde Steuereinheit. Die Steuereinheit ist dabei dazu ausgebildet - d.h. schaltungs- und/oder programmtechnisch eingerichtet - einen Temperaturwert der Prozesstemperatur nach Maßgabe der wie vorstehend beschrieben ausgewerteten Werkzeuginnendruckkurve anzupassen. Die Steuereinheit ist mit anderen Worten zur automatischen Durchführung des vorstehend beschriebenen Verfahrens in einer seiner Ausführungsformen eingerichtet.

Wie vorstehend angeführt, wird als Prozesstemperatur in einer Variante des Verfahrens eine Heißkanaltemperatur herangezogen. In diesem Fall wirkt die das Verfahren durchführende Steuereinheit auf eine diesem Heißkanal zugeordnete Heizeinrichtung des Spritzgusswerkzeugs.

Alternativ oder zusätzlich steuert die Steuereinheit eine Heizeinrichtung, die einem Zylinder und/oder einer diesem vorangestellten Düse einer Spritzgussmaschine zugeordnet ist und beeinflusst als Prozesstemperatur die Zylindertemperatur bzw. Düsentemperatur nach dem vorstehend beschriebenen Verfahren.

Die Steuereinheit wirkt auf die Heizeinrichtung bevorzugt in Form eines geschlossen Regelkreises, beeinflusst die Heizeinrichtung also durch eine nach Maßgabe eines Sollwert-Istwert-Vergleichs der Prozesstemperatur ermittelten Stellgröße. In diesem Fall ist die Steuereinheit zweckmäßigerweise dazu ausgebildet, den Temperatursollwert der Temperaturregelung nach dem vorstehend beschrieben Verfahren anzupassen. Alternativ kann die Steuereinheit als einfaches ungeregeltes Stellglied auf die Heizeinrichtung wirken. In diesem Fall wird der Temperaturwert der Prozesstemperatur mittels der Steuereinheit lediglich mittelbar durch Anpassung der der Heizeinrichtung von der Steuereinheit zugeführten Stellgröße angepasst.

Nachfolgend werden Ausführungsbeispiele der Erfindung anhand einer Zeichnung näher erläutert. Darin zeigen:

Fig. 1    in schematischer Darstellung eine Spritzgussanlage mit einer Spritzgussmaschine, einem Spritzgusswerkzeug und einer Steuereinheit zur Einstellung der Zylindertemperatur in der Spritzgussmaschine,

Fig. 2    in einem schematischen Diagramm den zeitlichen Verlauf des Werkzeuginnendrucks während eines Spritzgussganges,

Fig. 3    in schematischen Diagrammen die zeitliche Änderung eines Mittelwerts der Werkzeuginnendruckkurve in der Nachdruckphase über mehrere aufeinanderfolgende Spritzgussgänge sowie auf entsprechender Zeitskala den Verlauf eines von der Steuereinheit bestimmten Temperatursollwertes der Zylindertemperatur für eine erste Variante des von der Steuereinheit ausgeführten Verfahrens, sowie

Fig. 4    in Darstellung gemäß Fig. 3 den Verlauf des mittleren Werkzeuginnendrucks und des Temperatursollwerts für eine zweite Variante des Verfahrens.

Einander entsprechende Teile und Größen sind in allen Figuren stets mit den gleichen Bezugszeichen versehen.

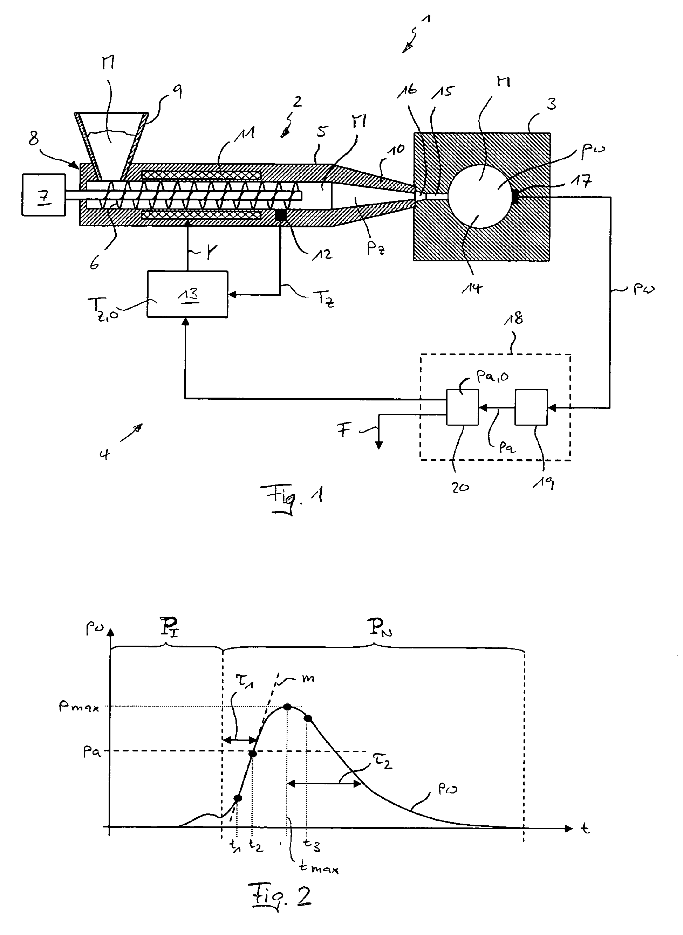

Die in Fig. 1 dargestellte Spritzgussanlage 1 umfasst eine Spritzgussmaschine 2, ein Spritzgusswerkzeug 3 sowie eine Steuereinheit 4. Die Spritzgussmaschine 2 umfasst einen Zylinder 5, in dem eine Schnecke 6 rotierbar gelagert ist. Die Schnecke 6 ist von einem elektrischen oder hydraulischen Schneckenantrieb 7 rotatorisch angetrieben.

Im Betrieb der Spritzgussmaschine 2 wird dem Zylinder 5 an einem hinteren Ende 8 eine feste Spritzgussmasse M, die ihm Rohzustand gewöhnlich in Form eines Granulats vorliegt, über einen Einfüllstutzen 9 zugeführt. Durch Rotation der Schnecke 6 wird die Spritzgussmasse M innerhalb des Zylinders 5 in Richtung auf eine Düse 10 vorgetrieben. Beim Vortrieb wird die Spritzgussmasse M mittels einer in oder an der Wandung des Zylinders 5 vorgesehenen Heizeinrichtung 11 aufgeschmolzen. Bei der Heizeinrichtung handelt 11 es sich insbesondere um eine elektrische Heizspule.

In einem vorderen Bereich des Zylinders 5, somit in Vorschubrichtung der Spritzgussmasse M stromab der Heizeinrichtung 11, ist an der Wand des Zylinders 5 ein Temperatursensor 12 angeordnet, der im Betrieb der Spritzgussmaschine 2 die Temperatur der hier bereits vollständig aufgeschmolzenen Spritzgussmasse M misst. Diese Prozesstemperatur ist nachfolgend als Zylindertemperatur $T_Z$ bezeichnet.

Der Temperatursensor 12 führt einen entsprechenden Messwert der Zylindertemperatur $T_Z$ einem Temperaturregler 13 als Ist-Wert zu. Der Temperaturregler 13, der ein Bestandteil der Steuereinheit 4 ist, vergleicht die gemessene Zylindertemperatur $T_Z$ fortlaufend mit einem vorgegebenen (Temperatur-)Sollwert $T_{Z,0}$ und erzeugt anhand des Vergleichsergebnisses als Stellgröße Y eine Heizspannung, mit der die Heizeinrichtung 11 angesteuert wird. Der Temperaturregler 13 steuert hierbei die Heizeinrichtung 11 derart an, dass durch Variation der Heizleistung die Zylindertemperatur $T_Z$ an den Sollwert $T_{Z,0}$ angeglichen wird.

In dem Spritzgusswerkzeug 3 ist eine Kavität 14 gebildet, die die Negativform eines in einem Spritzgussgang herzustellenden Formteils bildet und die im Zuge des Spritzgussgangs mit der aufgeschmolzenen Spritzgussmasse M ausgefüllt wird. Die Kavität 14 ist mit einem Leitsystem 15 von Anguss- und/oder Heißkanälen verbunden. Das Leitsystem 15 mündet hierbei in einer Einspritzöffnung 16 an der Oberfläche des Spritzgusswerkzeuges 3.

Im Zuge eines Spritzgussgangs, d.h. eines Arbeitszyklus der Spritzgussanlage 1, der zur Herstellung eines Formteils führt, wird die Austrittsöffnung der Düse 10 druckdicht auf die Einspritzöffnung 16 aufgesetzt und Spritzgussmasse M über das Leitsystem 15 in die Kavität 14 eingespritzt. Der Spritzgussgang gliedert sich hierbei in eine Einspritzphase $P_I$ (Fig. 2) sowie eine anschließende Nachdruckphase $P_N$ (Fig. 2). Im Zuge der Einspritzphase $P_I$ wird die Kavität 14 sukzessive mit Spritzgussmasse M ausgefüllt. Die Einspritzphase $P_I$ ist beendet, sobald die Kavität 14 vollständig mit Spritzgussmasse M ausgefüllt ist. In der Nachdruckphase $P_N$ werden die Spritzgussmaschine 2 und das Spritzgusswerkzeug 3 weiterhin in Kontakt belassen, wobei im Zylinder 5 ein konstanter Zylinderinnendruck $p_Z$ (auch als Nachdruck bezeichnet) aufrecht erhalten wird, um die in der Kavität 14 befindliche Spritzgussmasse M über das Leitsystem 15 mit einem hydrostatischen Druck zu beaufschlagen und die in der Kavität 14 befindliche Spritzgussmasse M hierdurch zu verdichten.

Während der Nachdruckphase $P_N$ erkaltet die in der Kavität 14 befindliche Spritzgussmasse M, wobei sie sukzessive erstarrt. Am Ende der Nachdruckphase $P_N$ hat sich durch Erkaltung und Erstarrung der Spritzgussmasse M in der Kavität 14 das fertige Formteil gebildet, das nach Beendigung der Nachdruckphase $P_N$ ausgeformt und der weiteren Verarbeitung zugeführt wird.

Der Druck der in der Kavität 14 befindlichen Spritzgussmasse M wird nachfolgend als Werkzeuginnendruck $p_W$ bezeichnet. Im Zuge des Spritzgussganges ergibt sich für diesen Werkzeuginnendruck $p_W$ ein spezifischer Verlauf gegen die Zeit t, der in Fig. 2 schematisch dargestellt ist. Aus der Darstellung ist zu entnehmen, dass der Werkzeuginnendruck $p_W$ über einen Anfangsbereich der Einspritzphase $P_I$ (gegenüber Raumdruck) im Wesentlichen den Wert Null hat. Erst gegen Ende der Einspritzphase $P_I$ steigt der Werkzeuginnendruck $p_W$ auf ein vergleichsweise geringes Niveau an. Nach dem Übergang in die Nachdruckphase $P_N$ steigt der Werkzeuginnendruck $p_W$ dann sprunghaft auf einen vergleichsweise hohen Wert an. Nach dem Durchlaufen eines Maximums sinkt der Werkzeuginnendruck $p_W$ dann allmählich wieder auf den Wert Null ab. Dieses Absinken des Werkzeuginnendrucks $p_W$ ist eine Folge der zunehmenden Erkaltung und Erstarrung in der in der Kavität 14 befindlichen Spritzgussmasse M.

Das Maximum der in Fig. 2 dargestellten Werkzeuginnendruckkurve ist gekennzeichnet durch einen zugehörigen Zeitpunkt $t_{max}$ sowie durch einen zugehörigen Maximalwert $p_{max}$ des Werkzeuginnendrucks $p_W$. Der Verlauf der Werkzeuginnendruckkurve in der Nachdruckphase $P_N$ kann weiterhin charakterisiert werden durch einen Mittelwert $p_a$ des Werkzeuginnendrucks $p_W$. Dieser (lediglich schematisch in Fig. 2 eingezeichnete) Mittelwert $p_a$ kann grundsätzlich auf verschiedene Weise definiert werden. In numerisch besonders einfacher Weise ist der Mittelwert $p_a$ insbesondere durch das arithmetische Mittel einer bestimmten Anzahl N von zu bestimmten Zeitpunkten $t_i (i = 1,2,...,N)$ innerhalb der Nachdruckphase $P_N$ erfassten Messwerten des Werkzeuginnendrucks $p_W$ bestimmt:

$$p_a = \frac{1}{N} \cdot \sum_{i=1}^{N} p_W(t_i) \, . \qquad \text{Glg. 1}$$

Ferner kann die Werkzeuginnendruckkurve in der Nachdruckphase $P_N$ auch durch Bestimmung einer Anfangssteigung m, einer Zeitkonstante $\tau_1$ für den Anstieg des Werkzeuginnendrucks $p_W$ in der Nachdruckphase $P_n$ und/oder einer Zeitkonstante $\tau_2$ für den Abfall des Werkzeuginnendrucks $p_W$ in der Nachdruckphase $P_N$ charakterisiert werden. Die Anfangssteigung m ist beispielsweise definiert durch die Steigung der Tangente an den steilsten Punkt der Werkzeuginnendruckkurve während des Druckanstiegs in der Nachdruckphase $P_N$ - oder äquivalentermaßen durch das Maximum der zeitlichen Ableitung der Werkzeuginnendruckkurve. Die Zeitkonstante $\tau_1$ ist beispielsweise definiert durch die Zeitspanne zwischen dem Beginn der Nachdruckphase $P_N$ und dem Zeitpunkt, an dem der Werkzeuginnendruck $p_W$ innerhalb der Nachdruckphase $P_N$ einen bestimmten Prozentsatz des Maximalwerts $p_{max}$, insbesondere $(1-1/e) \cdot p_{max}$, erreicht. Ebenso ist die Zeitkonstante $\tau_2$ beispielsweise definiert durch die Zeitspanne zwischen dem Zeitpunkt $t_{max}$ und dem Zeitpunkt, an dem der Werkzeuginnendruck $p_W$ innerhalb der Nachdruckphase $P_N$ auf einen bestimmten Prozentsatz des Maximalwertes $p_{max}$, insbesondere auf $1/e \cdot p_{max}$ abgesunken ist. Die Konstante e steht hierbei für die so genannte Eulersche Zahl (e = 2,718...).

Alle oben aufgeführten Kenngrößen $p_{max}$, $t_{max}$, $p_a$, m, $\tau_1$ und $\tau_2$ beinhalten eine Information über die Form der Werkzeuginnendruckkurve, ohne auf der Zeitskala eines einzelnen Spritzgussganges eine Abhängigkeit von der Zeit t aufzuweisen. Die Kenngrößen $p_{max}$, $t_{max}$, $p_a$, m, $\tau_1$ und $\tau_2$ fallen vielmehr während eines jeden Spritzgussganges in Form eines einfachen Zahlwertes - beispielsweise in Form einer Fließkommazahl (float) - an. Die Werkzeuginnendruckkurve kann daher anhand einer oder mehrerer der genannten Kenngrößen $p_{max}$, $t_{max}$, $p_a$, m, $\tau_1$ und $\tau_2$ in numerisch besonders anspruchsloser Weise analysiert werden.

Zur Messung des Werkzeuginnendrucks $p_W$ ist das Spritzgusswerkzeug 3 mit einem in die Wand der Kavität 14 eingesetzten Drucksensor 17 (Fig. 1) versehen.

Der Drucksensor 17 leitet einen Messwert des Werkzeuginnendrucks $p_W$ einer Auswerteeinheit 18 zu, die einen weiteren Bestandteil der Steuereinheit 4 bildet. Die Auswerteeinheit 18 ist bevorzugt durch einen einfachen Mikrocontroller mit einer darin implementierten Regelsoftware gebildet, kann aber auch rein softwaretechnisch realisiert sein.

Der Temperaturregler 13 und die Auswerteeinheit 18 können dabei wahlweise integrale Teile eines gemeinsamen Hard- oder Softwarebausteins sein oder als physikalisch und/oder logisch getrennte Einheiten vorliegen. Der Temperaturregler 13 und die Auswerteeinheit 18 können zudem auch als funktionale Bausteine in eine Maschinensteuerung der Spritzgussmaschine 2 integriert sein.

Innerhalb der Auswerteeinheit 18 wird der zeitliche Verlauf des Werkzeuginnendrucks $p_W$ durch ein Analysemodul 19 erfasst. Das Analysemodul 19 erfasst hierbei während der Nachdruckphase $P_N$ mehrere Messwerte des Werkzeuginnendrucks $p_W$ zu unterschiedlichen, vorgegebenen Zeitpunkten $t_i$ während der Nachdruckphase $P_N$ und berechnet hieraus eine oder mehrere der vorstehend beschriebenen Kenngrößen $p_{max}$, $t_{max}$, $p_a$, m, $\tau_1$ oder $\tau_2$.

Zur Vereinfachung wird nachfolgend davon ausgegangen, dass das Analysemodul 19 als einzige Kenngröße den Mittelwert $p_a$ ermittelt, indem es beispielsweise N = 3 Messwerte des Werkzeuginnendrucks $p_W$ zu festgelegten Zeitpunkten $t_1$, $t_2$, $t_3$ während der Nachdruckphase $P_N$ erfasst und nach Glg. 1 aufsummiert. Den berechneten Mittelwert $p_a$ gibt das Analysemodul 19 an ein nachgeschaltetes Regelmodul 20 weiter. In dem Regelmodul 20 wird der Mittelwert $p_a$ mit einem vorgegebenen Referenzwert $p_{a,0}$ verglichen. Anhand des Vergleichsergebnisses ermittelt das Regelmodul 20 auf nachfolgend näher beschriebene Weise einen angepassten Temperatursollwert $T_{Z,0}$. Das Regelmodul 20 übermittelt diesen angepassten Temperatursollwert $T_{Z,0}$ an den Temperaturregler 13, der diesen Temperatursollwert $T_{Z,0}$ als neuen Sollwert für die Einstellung der Zylindertemperatur $T_Z$ hinterlegt.

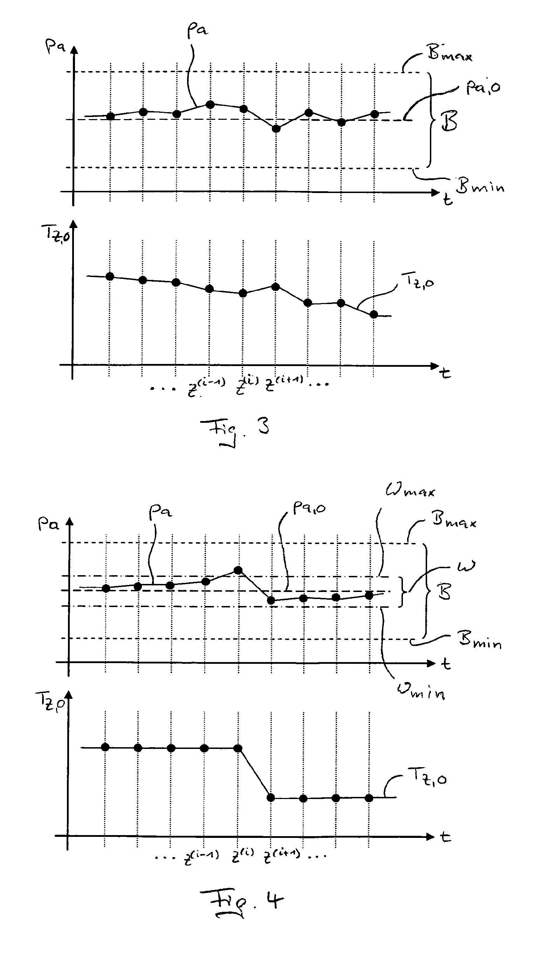

In dem Regelmodul 20 wird der Mittelwert $p_a$ ferner mit einem Toleranzbereich B (Fig. 3 und 4) verglichen, der durch Randwerte $B_{min}$ und $B_{max}$ mit $B_{min} < p_{a,0} < B_{max}$ aufgespannt wird. Der Toleranzbereich B ist hierbei derart gewählt, dass eine hinreichende Qualität des im laufenden Spritzgussgang hergestellten Formteiles sichergestellt werden kann, solange der Mittelwert $p_a$ innerhalb des Toleranzbereichs B liegt. Stellt das Regelmodul 20 fest, dass der Mittelwert $p_a$ außerhalb des Toleranzbereichs T liegt, so erzeugt es ein Fehlersignal F. Dieses Fehlersignal F wird einem der Spritzgussanlage 1 nachgeschalteten Sortierer (nicht dargestellt) zugeführt und bewirkt, dass der Sortierer das im laufenden Spritzgussgang erzeugte Formteil als Schlechtteil aussondert.

In einer ersten Variante der Spritzgussanlage 1 ist das Regelmodul 20 im Wesentlichen durch einen Proportionalregler gebildet. Die Eigenschaften dieser Ausführungsvariante sind anhand von Fig. 3 verdeutlicht.

Das Regelmodul 20 ermittelt in diesem Fall bei jedem Spritzgussgang $Z^{(i)}$ (i = 1,2,3...) die Abweichung des ermittelten Mittelwerts $p_a$ zu dem Referenzwert $p_{a,0}$ und bestimmt anhand dieser Abweichung den angepassten Temperatursollwertwert $T_{Z,0}$ nach der Relation

$$T_{Z,0}^{(i+1)} = T_{Z,0}^{(i)} + K \cdot \left(p_a - p_{a,0}\right) \qquad \text{Glg. 2}$$

wobei K eine empirisch festgelegte Proportionalitätskonstante ist. In Glg. 2 stehen $T_{Z,0}^{(i)}$ für den Temperatursollwert $T_{Z,0}$ im jeweils laufenden Spritzgussgang $Z^{(i)}$, und $T_{Z,0}^{(i+1)}$ für den Temperatursollwert $T_{Z,0}$ im jeweils nächstfolgenden Spritzgussgang $Z^{(i+1)}$.

Der Temperatursollwert $T_{Z,0}$ wird - wie aus Fig. 3 erkennbar - daher in der Abfolge der aufeinander folgenden Spritzgussgänge $Z^{(i)}$ kontinuierlich oder zumindest quasi-kontinuierlich in kleinen Schritten variiert. Infolge dieser kontinuierlichen Variation des Temperatursollwert $T_{Z,0}$ wird der Mittelwert $p_a$ stets in der näheren Umgebung des Referenzwertes $p_{a,0}$ gehalten.

In einer anhand von Fig. 4 verdeutlichten alternativen Ausführung der Steuereinheit 4 vergleicht das Regelmodul 20 den berechneten Mittelwert $p_a$ zunächst mit einem Schwellwertbereich W, der durch Randwerte $W_{min}$ und $W_{max}$ mit $B_{min} < W_{min} < p_{a,0} < W_{max} < B_{max}$ aufgespannt wird. Solange der Mittelwert $p_a$ innerhalb des Schwellwertbereichs W liegt, lässt das Regelmodul 20 den Temperatursollwert $T_{Z,0}$ unverändert. Stellt das Regelmodul 20 dagegen fest, dass der Mittelwert $p_a$ den Schwellwertbereich W über- oder unterschreitet, so setzt es den Temperatursollwert $T_{Z,0}$ stufenartig um einen vorgegebenen Differenzbetrag von beispielsweise 2 °C herab bzw. herauf. Der Differenzbetrag ist derart gewählt, dass der Mittelwert $p_a$ in den folgenden Spritzgussgängen $Z^{(i)}$ - sobald sich die Zylindertemperatur $T_Z$ an den neuen Sollwert $T_{Z,0}$ angepasst hat - in jedem Fall wieder innerhalb des Schwellwertbereiches W liegt.

Der Schwellwertbereich W ist ferner derart gewählt, dass zwischen seinen Randwerten $W_{min}$ und $W_{max}$ und den entsprechenden Randwerten $B_{min}$ und $B_{max}$ des Toleranzbereiches B hinreichende Sicherheitsabstände gewahrt sind. Auf diese Weise wird sichergestellt, dass auch wenn der Mittelwert $p_a$ in der laufenden Produktion den Schwellwertbereich W verlässt, keine Schlechtteile produziert werden, bevor die Steuereinheit 4 den Temperatursollwert $T_{Z,0}$ anpasst.

Die Module 19 und 20 sind bevorzugt Softwarebausteine der in der Steuereinheit 4 implementierten Regelsoftware. Sie können alternativ aber auch ganz oder teilweise schaltungstechnisch realisiert sein.

In (nicht explizit dargestellten) Varianten der Spritzgussanlage 1 umfasst diese weitere Heizeinrichtungen zur Einstellung der Temperatur der Spritzgussmasse M in der Düse 10 und/oder in einem sogenannten Heißkanal des Leitsystems 15. In diesem Fall wirkt der Temperaturregler 13 bevorzugt auch auf mindestens eine dieser weiteren Heizeinrichtungen und regelt somit auch die Düsentemperatur bzw. die Heißkanaltemperatur der Spritzgussmasse M. Alternativ können zur Regelung jeder dieser Prozesstemperaturen auch separate Temperaturregler vorgesehen sein.

Im einfachsten Fall werden die verschiedenen Prozesstemperaturen auf denselben Temperatursollwert geregelt. Alternativ können aber auch individuelle verschiedene Temperatursollwerte für jede Prozesstemperatur hinterlegt sein.

Im Falle mehrerer Prozesstemperaturen wird bevorzugt der Temperatursollwert jeder Prozesstemperatur nach dem Verfahren gemäß Fig. 3 oder Fig. 4 angepasst.

Bezugszeichenliste

| | |
|---|---|
| 1 | Spritzgussanlage |
| 2 | Spritzgussmaschine |
| 3 | Spritzgusswerkzeug |
| 4 | Steuereinheit |
| 5 | Zylinder |
| 6 | Schnecke |
| 7 | Schneckenantrieb |
| 8 | Ende |
| 9 | Einfüllstutzen |
| 10 | Düse |
| 11 | Heizeinrichtung |
| 12 | Temperatursensor |
| 13 | Temperaturregler |
| 14 | Kavität |
| 15 | Leitsystem |
| 16 | Einspritzöffnung |
| 17 | Drucksensor |
| 18 | Auswerteeinheit |
| 19 | Analysemodul |
| 20 | Regelmodul |

| | |
|---|---|
| $\tau_1, \tau_2$ | Zeitkonstante |
| m | Anfangssteigung |
| $p_a$ | Mittelwert (des Werkzeuginnendrucks) |
| $p_{a,0}$ | Referenzwert (des Mittelwerts) |
| $p_{max}$ | Maximaldruck |
| $p_W$ | Werkzeuginnendruck |
| $p_Z$ | Zylinderinnendruck |
| t | Zeit |
| $t_i$ | Zeitpunkt (i = 1,2,...,N) |

| | |
|---|---|
| $t_{max}$ | Zeitpunkt (des Maximaldrucks) |
| B | Toleranzbereich |
| $B_{min}$ | Randwert |
| $B_{max}$ | Randwert |
| F | Fehlersignal |
| M | Spritzgussmasse |
| $P_I$ | Einspritzphase |
| $P_N$ | Nachdruckphase |
| $T_Z$ | Zylindertemperatur |
| $T_{Z,0}$ | Sollwert (der Zylindertemperatur) |
| W | Schwellwertbereich |
| $W_{min}$ | Randwert |
| $W_{max}$ | Randwert |
| Y | Stellgröße |
| $Z^{(i)}$ | Spritzgussgang (i = 1,2,3,...) |

**Patentansprüche**

1. Spritzgussverfahren, bei dem während der Nachdruckphase ($P_N$) eines Spritzgussganges ($Z^{(i)}$) der zeitliche Verlauf eines Werkzeuginnendrucks ($p_W$) gemessen wird, bei dem aus dem erfassten Verlauf des Werkzeuginnendrucks ($p_W$) mindestens eine nicht-zeitabhängige Kenngröße ($p_a$; $p_{max}$, $t_{max}$, m, $\tau_1$, $\tau_2$) ermittelt wird, bei dem die oder jede Kenngröße ($p_a$; $p_{max}$, $t_{max}$, m, $\tau_1$, $\tau_2$) mit einem hinterlegten Kenngrößen-Sollwert ($p_{a,0}$) verglichen wird, und bei dem anhand des Vergleichsergebnisses automatisch ein Temperaturwert ($T_{Z,0}$) einer Prozesstemperatur ($T_Z$) angepasst wird.

2. Spritzgussverfahren nach Anspruch 1, bei dem als Kenngröße ein Maximalwert ($p_{max}$), ein diesem zugeordneter Zeitpunkt ($t_{max}$), ein Mittelwert ($p_a$) und/oder eine Anfangssteigung (m) des erfassten Verlaufs des Werkzeuginnendrucks ($p_W$) und/oder eine Zeitkonstante ($\tau_1$,$\tau_2$) für den Anstieg oder Abfall des erfassten Werkzeuginnendrucks ($p_W$) herangezogen werden.

3. Spritzgussverfahren nach Anspruch 1 oder 2, bei dem der angepasste Temperaturwert ($T_{Z,0}$) nur dann ermittelt wird, wenn die Kenngröße ($p_a$) bzw. mindestens eine der Kenngrößen ($p_a$, $p_{max}$, $t_{max}$, m, $\tau_1$, $\tau_2$) außerhalb eines vorgegebenen Schwellwertbereichs (W) um den jeweils zugehörigen Kenngrößen-Sollwert ($p_{a,0}$) liegt.

4. Spritzgussverfahren nach Anspruch 3, bei dem ein in dem Spritzgussgang ($Z^{(i)}$) gefertigtes Formteil als Schlechtteil aussortiert wird, wenn die Kenngröße ($p_a$) bzw. mindestens eine der Kenngrößen ($p_a$, $p_{max}$, $t_{max}$, m, $\tau_1$, $\tau_2$) außerhalb eines vorgegebenen Toleranzbereichs (B) um den jeweils zugehörigen Kenngrößen-Sollwert ($p_{a,0}$) liegt, wobei der Schwellwertbereich (W) derart gewählt ist, dass er mit Abstand innerhalb des Toleranzbereichs (B) liegt.

5. Verfahren nach einem der Ansprüche 1 bis 4, bei dem die Prozesstemperatur eine Zylindertemperatur ($T_Z$), Düsentemperatur oder Werkzeug-Heißkanaltemperatur ist.

6. Verfahren nach einem der Ansprüche 1 bis 5, bei dem die Prozesstemperatur ($T_Z$) geregelt wird, und bei dem als Temperaturwert ein dieser Regelung zugrundeliegender Temperatursollwert ($T_{Z,0}$) angepasst wird.

7. Spritzgussanlage (1)

   - mit einem Spritzgusswerkzeug (3), das mit mindestens einem Innendrucksensor (17) zur Erfassung eines Werkzeuginnendrucks ($p_W$) versehen ist,
   - mit einer Heizeinrichtung ( 11) zur Einstellung einer Prozesstemperatur ($T_Z$),
   - sowie mit einer Steuereinheit (4) zur Ansteuerung der Heizeinrichtung (11), die dazu ausgebildet ist,

      o aus dem von dem Innendrucksensor (17) während der Nachdruckphase ($P_N$) eines Spritzgussganges ($Z^{(i)}$) erfassten zeitlichen Verlauf des Werkzeuginnendrucks ($p_Z$) mindestens eine nicht-zeitabhängige Kenngröße ($p_a$; $p_{max}$, $t_{max}$, m, $\tau_1$, $\tau_2$) zu ermitteln,
      o die oder jede Kenngröße ($p_a$; $p_{max}$, $t_{max}$, m, $\tau_1$, $\tau_2$) mit einem hinterlegten Kenngrößen-Sollwert ($p_{a,0}$) zu vergleichen, und
      o anhand des Vergleichsergebnisses die Heizeinrichtung (11) derart anzusteuern, dass ein angepasster Temperaturwert ($T_{Z,0}$) der Prozesstemperatur ($T_Z$) eingestellt wird.

8. Spritzgussanlage (1) nach Anspruch 7, wobei die Steuereinheit (4) dazu ausgebildet ist, als Kenngröße einen Maximalwert ($p_{max}$), einen diesem zugehörigen Zeitpunkt ($t_{max}$), einen Mittelwert ($p_a$) und/oder eine Anfangssteigung (m) des erfassten Verlaufs des Werkzeuginnendrucks ($p_W$) und/oder eine Zeitkonstante ($\tau_1$,$\tau_2$) für den Anstieg oder Abfall des Werkzeuginnendrucks ($p_W$) zu ermitteln.

9. Spritzgussanlage (1) nach Anspruch 7 oder 8, wobei die Steuereinheit (4) dazu ausgebildet ist, den Temperaturwert ($T_{Z,0}$) der Prozesstemperatur ($T_Z$) nur dann anzupassen, wenn die Kenngröße ($p_a$) bzw. mindestens eine der Kenngrößen ($p_a$, $p_{max}$, $t_{max}$, m, $\tau_1$, $\tau_2$) außerhalb eines vorgegebenen Schwellwertbereichs (W) um den jeweils zugehörigen Kenngrößen-Sollwert ($p_{a,0}$) liegt.

10. Spritzgussanlage (1) nach Anspruch 9, wobei Steuereinheit (4) dazu ausgebildet ist, ein in dem Spritzgussgang ($Z^{(i)}$) gefertigtes Formteil als auszusortierendes Schlechtteil zu kennzeichnen, wenn die Kenngröße ($p_a$) bzw. mindestens eine der Kenngrößen ($p_a$, $p_{max}$, $t_{max}$, m, $\tau_1$, $\tau2$) außerhalb eines vorgegebenen Toleranzbereichs (B) um den jeweils zugehörigen Kenngrößen-Sollwert ($p_{a,0}$) liegt, wobei der Schwellwertbereich (W) derart vorgegeben ist, dass er mit Abstand innerhalb des Toleranzbereichs (B) liegt.

11. Spritzgussanlage (1) nach einem der Ansprüche 7 bis 10, wobei die Heizeinrichtung (11) auf einen Heißkanal des Spritzgusswerkzeugs (3) wirkt, und es sich bei der Prozesstemperatur um die Heißkanaltemperatur handelt.

12. Spritzgussanlage (1) nach einem der Ansprüche 7 bis 11, mit einer Spritzgussmaschine (2), die einen Zylinder (5) mit vorgelagerter Düse (10) zum Einspritzen einer verflüssigten Spritzgussmasse (M) in das Spritzgusswerkzeug (3) umfasst, wobei die Heizeinrichtung (11) auf den Zylinder (5) und/oder die Düse (10) wirkt, und es sich bei der Prozesstemperatur um die Zylindertemperatur ($T_Z$) bzw. Düsentemperatur handelt.

13. Spritzgussanlage (1) nach einem der Ansprüche 7 bis 12, wobei die Steuereinheit (4) zur Regelung der Prozesstemperatur ($T_Z$) ausgebildet ist, und anhand des Vergleichsergebnisses einen dieser Regelung zugrundeliegenden Temperatursollwert ($T_{Z,0}$) anpasst.

Fig. 1

Fig. 2

Fig. 3

Fig. 4

| | Europäisches Patentamt<br>European Patent Office<br>Office européen des brevets | **EUROPÄISCHER RECHERCHENBERICHT** | **Nummer der Anmeldung**<br>EP 08 01 7593 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 897 786 A (KK HOLDING AG [CH] KISTLER HOLDING AG [CH])<br>24. Februar 1999 (1999-02-24)<br>* Absätze [0012], [0015] - [0017]; Abbildung 3 *<br>----- | 1-13 | INV.<br>B29C45/78<br>B29C45/77 |
| X | SCHNERR-HAESELBARTH O: "DER HEISSE DRAHT INS WERKZEUG WERKZEUGINNENDRUCK-BASIERTE SYSTEME STEIGERN DIE PRODUKTIVITAT UND SENKEN DIE KOSTEN"<br>KUNSTSTOFFE, CARL HANSER VERLAG, MUNCHEN, DE,<br>Bd. 92, Nr. 7, 1. Juli 2002 (2002-07-01), Seiten 56-60, XP001119603<br>ISSN: 0023-5563<br>* Seite 59, mittlere Spalte; Abbildungen 5,8 *<br>----- | 1,2,4,7,8,10 | |
| A | WELLER S: "INNENDRUCKMESSUNG BEIM SPRITZGIESSEN DATENMANAGEMENT IN DER QUALITAETSSICHERUNG"<br>KUNSTSTOFFE, CARL HANSER VERLAG, MUNCHEN, DE,<br>Bd. 90, Nr. 5, 1. Mai 2000 (2000-05-01), Seite 74, XP000947393<br>ISSN: 0023-5563<br>* Seite 74, rechte Spalte, Absatz 1 *<br>----- | 4,10 | RECHERCHIERTE SACHGEBIETE (IPC)<br><br>B29C |
| A | DE 195 36 566 C1 (ARBURG GMBH & CO [DE])<br>6. Februar 1997 (1997-02-06)<br>* Anspruch 1; Abbildung 1 *<br>----- | 1-13 | |

Der vorliegende Recherchenbericht wurde für alle Patentansprüche erstellt

| Recherchenort | Abschlußdatum der Recherche | Prüfer |
|---|---|---|
| München | 11. März 2009 | Kujat, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 01 7593

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 0897786 | A | 24-02-1999 | AT | 320904 T | 15-04-2006 |
| DE 19536566 | C1 | 06-02-1997 | AT | 183132 T | 15-08-1999 |
| | | | CA | 2233650 A1 | 10-04-1997 |
| | | | WO | 9712740 A2 | 10-04-1997 |
| | | | EP | 0854778 A2 | 29-07-1998 |
| | | | JP | 11512665 T | 02-11-1999 |
| | | | US | 5945046 A | 31-08-1999 |

EPO FORM P0461

Für nähere Einzelheiten zu diesem Anhang : siehe Amtsblatt des Europäischen Patentamts, Nr.12/82